**Europäisches Patentamt**

**European Patent Office**

**Office européen des brevets**

(11) Veröffentlichungsnummer: **0 262 066**
**A1**

# EUROPÄISCHE PATENTANMELDUNG

(21) Anmeldenummer: **87440051.8**

(22) Anmeldetag: **24.08.87**

(51) Int. Cl.⁴: **B 02 C 19/14**
B 66 F 9/19, B 65 F 3/12

(30) Priorität: **25.08.86 CH 3399/86**

(43) Veröffentlichungstag der Anmeldung:
**30.03.88  Patentblatt  88/13**

(84) Benannte Vertragsstaaten: **AT DE FR GB SE**

(71) Anmelder: **Rump, Björn Sigurd**
**22 chemin du Rossignol**
**CH-1253 VANDOEUVRES  (CH)**

(72) Erfinder: **Rump, Björn Sigurd**
**22 chemin du Rossignol**
**CH-1253 VANDOEUVRES  (CH)**

(74) Vertreter: **Nuss, Pierre**
**10, rue Jacques Kablé**
**F-67000 Strasbourg  (FR)**

Die Bezeichnung der Erfindung wurde geändert (Richtlinien für die Prüfung im EPA, A-III, 7.3).

(54) **System zum Einsammeln, Lagern und Verladen von Glasbehältern.**

(57)   Das System umfasst einen Behälter (38) zum Einsammeln von Glasbehältern (1), (27), der mit einer Zerkleinerungsvorrichtung für die Glasbehälter (1), (27) versehen ist und einer Vorrichtung, welche das sichere Eintleeren des Behälters (38) in ein Transportmittel erlaubt. Die Zerkleinerungsvorrichtung kann manuell oder mechanisch angetrieben werden. Der Zerkleinerungsvorgang erfolgt durch Einlegen des Glases, den Verschluss der Einlegeöffnung (17), dem Zerkleinern des Glases, dem Reinigen der Auflagefläche (3), (18) von Bruchstücken und dem Wiederöffnen der Eingabeöffnung (17). Die Bewegung der Elemente wird durch Kurvenscheiben (21), (29), (30) gesteuert, welche so ausgelegt sind, dass die Betätigungskraft gleichmäßig über den Arbeitszyklus verteilt wird. Das System wird erst ökonomisch, wenn der gefüllte Behälter (38) leicht und sicher in ein Transportmittel entleert werden kann, darum enthält das System ein Hebezeug (41), welches den Behälter (38) erfaßt, durch eine autonome Verriegelung festhält und damit die vollständige Entleerung durch Kippen in voller Sicherheit und durch eine einzige Bedienungsperson ermöglicht.

Fig. 1a

## Beschreibung

### System zum ökonomischen Einsammeln von Glasbehältern, zur Lagerung des Glases und zum Verladen des Sammelgutes auf ein Transportmittel

Die Erfindung betrifft ein System, welches erlaubt, Glasbehälter beim Einsammeln zu zerschlagen und die Scherben in einem Behälter aufzufangen, welcher mit einer Hebevorrichtung in ein Transportmittel geleert werden kann.

Die Erfindung strebt die ökonomische Sammlung, Lagerung und Transportart an, um die Wiederverwertungskosten so tief als möglich zu halten. Dies wird neben der Erhöhung der Dichte des gelagerten und zu transportierenden Materials durch eine lückenlose und einfache Kette von Bedienungs- und Manipulationselementen gewährleistet.

Das System besteht aus zwei Teilen : Erstens aus einer Vorrichtung, welche die Glasbehälter beim Einsammeln zerschlägt. Diese Vorrichtung ist mit Vorteil auf den gewählten Sammelbehälter abgepasst. Zweitens aus einer Vorrichtung, welche es erlaubt, den gefüllten Behälter zu heben, zu öffnen und zu leeren. Diese Vorrichtung kann einfach von der Bedienungsperson des gewählten Transportmittels, z.B. des Lastwagenchauffeurs, bedient werden.

Die Erfindung trägt der Sicherheit der Personen, welche das Glas abliefern, von in der Nachbarschaft spielenden Kindern und derjenigen Person, welche die Behälter leert, voll Rechnung.

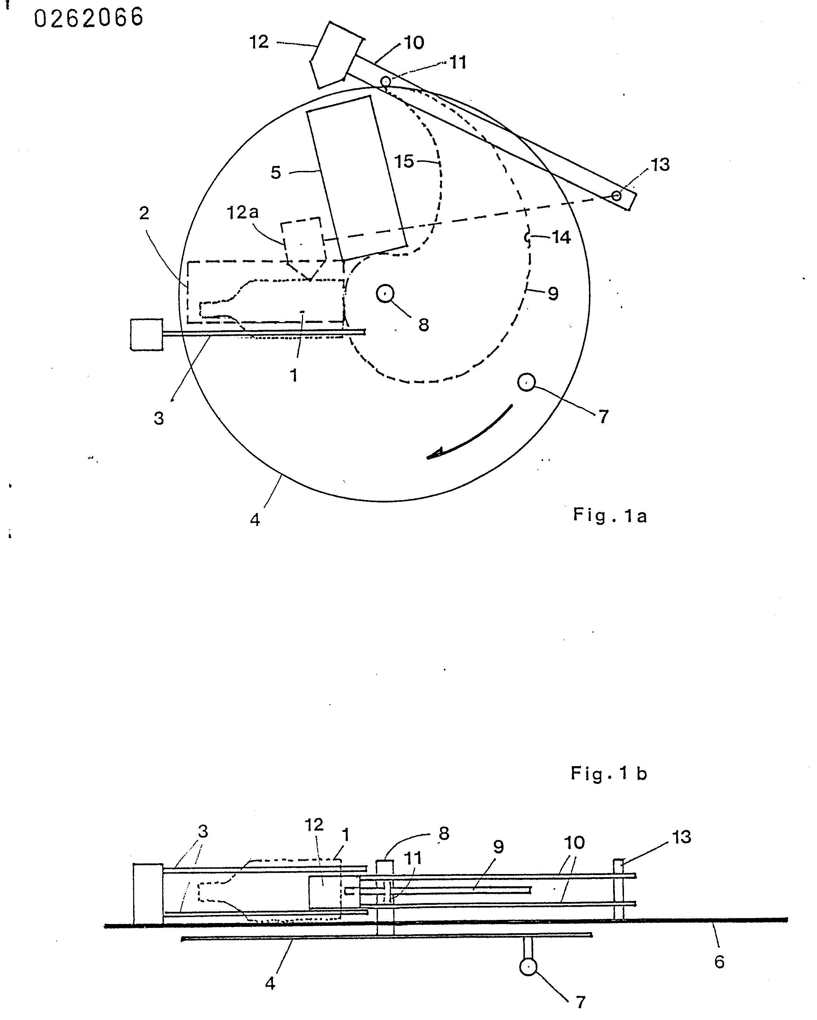

Fig. 1a et 1b zeigen ein Ausführungsbeispiel der Zerschlagvorrichtung, wobei Fig. 1a die Vorrichtung von der Bedienungsseite her zeigt, und Fig. 1b diese von oben gesehen darstellt.

Die meist zylindrischen Glasgefässe 1 werden von der Bedienungsperson durch die Öffnung 2 auf die Auflage 3, hier aus zwei parallelen Stäben bestehend, gelegt. Die Scheibe 4 hat drei Funktionen. In der Ruheposition befindet sich die Öffnung 5 in der Scheibe 4 über der Eingabeöffnung 2 der Behälterwand 6 (Bildebene in Fig. 1a) und gibt dadurch die Einfüllöffnung 5 frei.

Die auf der Scheibe 4 befindliche Kurbel 7 erlaubt das Drehen der Scheibe, wobei zuerst die Einfüllöffnung zur Sicherheit der Bedienungsperson verschlossen wird.

Die auf der Scheibe befestigte Achse dreht bei der erwähnten Drehbewegung die Kurvenscheibe 9.

Die Kurvenscheibe 9 hat zwei Aufgaben. Sie hebt das Schlagwerkzeug 10 über den Bolzen 11. Sobald die Kurvenscheibe 9 über die in Fig. 1a gezeigte Position im Uhrzeigersinn gedreht wird, fällt das Schlagwerkzeug 10 sich um die Achse 13 drehend, wobei der Hammer 12 den Glasgegenstand 1 zerschlägt (12a).

Beim Weiterdrehen der Kurbel 7 bewegt sich die Kurvenscheibe 9 zwischen den Auflagestäben 3 und befreit diese von allfälligen Glassplittern.

Diese Ausführungsart hat den weiteren Vorteil, dass nicht zerschlagbare Gegenstände, z.B. Büchsen, Plastik, Holzbehälter oder nicht zerschlagene Flaschen vor dem Beginn des nächsten Arbeitsganges weggeräumt werden.

Sobald die Kurbel 7 eine volle Umdrehung ausgeführt hat, ist die Einfüllöffnung wieder frei und der beschriebene Zyklus kann von neuem beginnen. Eine Kerbe 14 gibt durch Einrasten des Bolzens 11 das Ende des Vorganges an.

Die Geometrie der Kurvenscheibe wird so gewählt, dass die durch die Bedienungsperson aufzubringende Kraft möglichst gleichmässig über die ganze Drehbewegung verteilt ist und dadurch die Bedienung erleichtert. Die Aussparung 15 in der Kurvenscheibe 9 ermöglicht den Hauptteil der Drehung zum Anheben der Schlagvorrichtung zu nützen, ohne dass die Kurvenscheibe die Einlage der Gegenstände hindert.

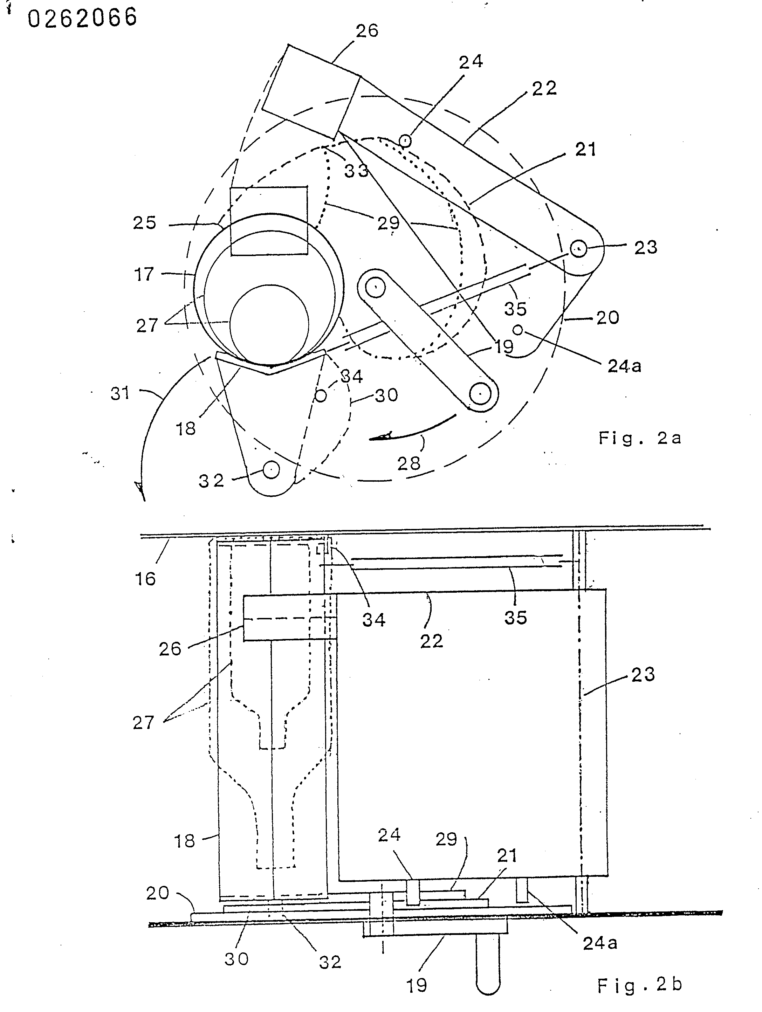

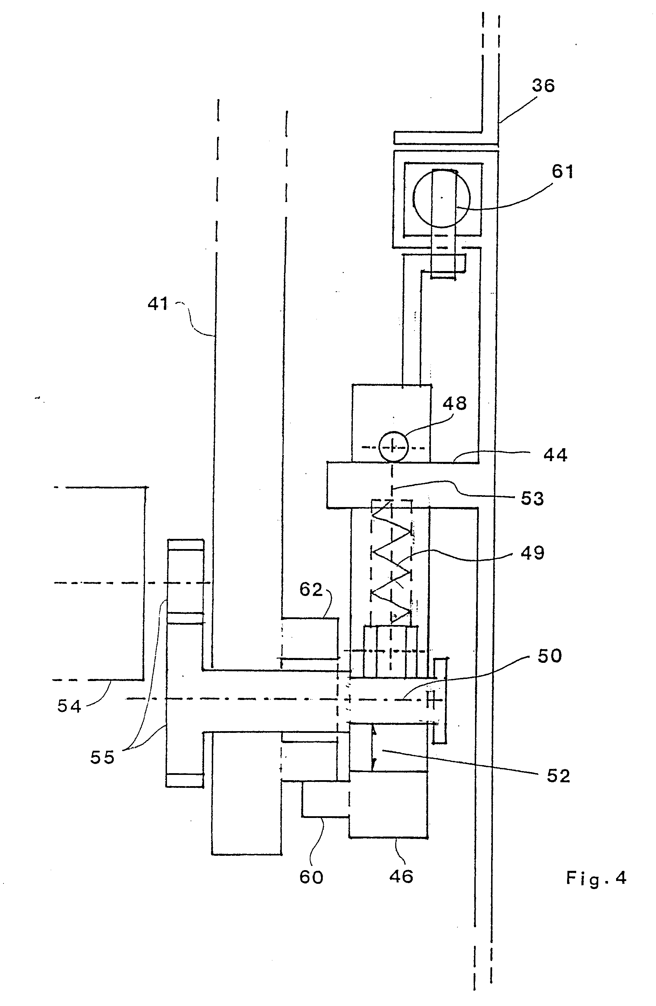

Eine zweite, der Erfindung entsprechende Ausführung der Zerschlagvorrichtung ist in Fig 2a und 2b gezeigt, Fig. 2a von vorn, Fig. 2b von oben. Die Vorrichtung ist in einem Teil des Auffangbehälters, wie z.B. in Fig. 3a gezeigt, eingebaut.

In dieser Figur ist die Vorrichtung in der Stellung zur Eingabe der Glasbehälter 27 gezeigt.

Die Glasbehälter (meistens Flaschen) werden durch die Öffnung 17 auf die Auflage 18 gelegt. Es ist vorteilhaft, die Vorrichtung so zu neigen (Fig. 3a), dass die eingelegten Flaschen 27 unabhängig von ihrer Grösse an die Wand 16 rutschen.

Der Arbeitsvorgang wird wieder von Hand durch Drehen der Kurbel 19 begonnen. Die Scheibe 20 schliesst zuerst die Öffnung 17. Dabeit hebt die Kurvenscheibe 21 das Schlagwerkzeug 22, welches sich um die Achse 23 dreht durch die Reibung des Bolzens 24 an der Kurvenscheibe 21.

Sobald der Bolzen 24 den Punkt 25 der Kurvenscheibe überschreitet, fällt die Masse 26 auf den eingelegten Glasgegenstand 27 und zerschlägt diesen. Die Geometrie ist so gewählt, dass dies unabhängig von der Grösse (Länge, Durchmesser) geschieht.

Beim Weiterdrehen der Kurbel 19 im angegebenen Drehsinn 28 drückt die Kurvenscheibe 29 die Stütze 30 der Auflage 18 nach links und kippt 31 dadurch die Auflage 18 um die Achse 32, um die entstandenen Scherben oder nicht zerschlagbaren Gegenstände in den Auffangbehälter zu kippen. Beim Weiterdrehen der Kurbel 19 beginnt das Anheben des Schlagwerkzeugs 22 über den Bolzen 24. Im selben Vorgang gibt die Kurvenscheibe 29 am Punkt 33 die Auflage 18 frei, welche durch die Feder 35 wieder in die Auffangslage zurückgezogen wird. Diese Bewegung wird durch den Bolzen 34 begrenzt.

Schlussendlich deckt sich die Öffnung 17 in der Scheibe 20 mit der Öffnung in der Wand 16.

Falls nötig, kann die Effizienz des Schlagwerkzeugs durch das Anbringen einer geeigneten Spiral- oder Torsionsfeder erhöht werden.

Beim schnellen Drehen der Kurbel 19 ist die Fallzeit des Hammers grösser als die Zeit bis zum Kippen der Auflage 18, wobei die Glasgegenstände unzerbrochen in den Behälter 38 fallen. Ein Bolzen 24a, welcher am Schlagwerkzeug 22 befestigt ist und wie in Fig. 2a gezeigt von der Kurvenscheibe 33 betätigt wird, beschleunigt das Schlagwerkzeug so nach unten, dass dieses unabhängig von der Drehgeschwindigkeit der Kurbel vor dem Kippen der Auflage 18 das erwünschte Zerschlagen der Glasbehälter erwirkt.

Auch bei dieser Ausführungsart wird durch entsprechendes Auslegen der Kurvenscheiben 21, 29, 30 darauf geachtet, dass die Hebelkraft gleichmässig und über einen möglichst grossen Drehwinkel verteilt ist, um die Bedienungskraft möglichst klein zu halten.

Falls die ökonomischen Gegebenheiten günstig sind, können die beschriebenen Vorrichtungen leicht durch einen Motor angetrieben werden, wobei durch Anbringen einer Rutschkupplung und durch Sicherheitskontakte (zwei gleichzeitig zu drückende Schalter) die Sicherheit der Bedienungsperson gewährleistet wird.

Weiterhin kann es wünschbar sein, dass die Bedienungsperson durch die Ausgabe von Münzen oder Marken belohnt wird. Der Stand der Technik hat solche Vorrichtungen schon mehrfach eingesetzt.

Der Nutzen der beschriebenen Vorrichtung wird durch die Möglichkeit den erwählten Sammelbehälter mit wenig Aufwand und an Ort und Stelle in das gewünschte Transportmittel zu leeren, wesentlich erhöht.

Die folgende Beschreibung erklärt das Prinzip des zweiten Teils des erfindungsgemässen Systems. Dieser Teil kann den rationellen Einsatz des Systems erhöhen, da er die Weiterverwertung des gesammelten Glasmaterials zur Verwertungsstelle auf einfachste Weise ermöglicht.

Die Beschreibung der Vorrichtung, Fig. 3a, 3b und 4, erfolgt durch die Erläuterung der einzelnen Arbeitsphasen.

Zur Zeit werden zum Sammeln von Glas häufig genormte, ca. 800 Liter fassende Behälter verwendet. Die Erfindung sieht vor, dass die Vorrichtung 37 z.B. nach Fig. 2a und 2b in den Deckel 36 mit dem Scharnier 40 so eingebaut wird, dass die Vorrichtung leicht durch eine Person, welche rechts vom gezeichneten Behälter 38 in Fig. 3a steht, beschickt und bedient werden kann. Der Bedienungsgriff 39 (Kurbel) deutet die Position der Vorrichtung an. Fig. 3b zeigt den Behälter 38 mit dem Deckel 36. Von der Vorrichtung 37 ist nur die Eingabeöffnung 17 und die Kurbel 39 sichtbar.

Diese Einbauart gewährleistet die volle Sicherheit der Personen, da das Austreten der Glasbruchstücke durch den ganz geschlossenen Behälter vermieden wird. Eine Verriegelungsvorrichtung 61 verhindert das Öffnen des Deckels 36 durch Unbefugte.

Zur Entleerung dient z.B. ein auf einem Lastwagen montierter Kran, an dem das Hebezeug aufgehängt ist. Dies besteht aus einem mit einem Tragring versehenen horizontalen Balken 42, an dessen Ende die für die Hebung und Entleerung dienenden Vorrichtungen 61 befestigt sind.

Zum Ansetzen des Hebezeuges wird dies rechts 43 auf die beiden Seiten des Behälters 38 eingefahren. (Fig. 3a zeigt die dem Betrachter zugewendete Seite). Die Verlängerung 45 an der Kippplatte 46 begrenzt diese Bewegung. Das Hebezeug ist dabei so tief aufgehängt, dass die Kippplatten 46 unter die am Behälter 38 befestigten Bolzen 44 (je zwei an jeder Seite) fahren kann.

Sobald der rechte Bolzen 44 die Verlängerung 45 berührt, wird das Hebezeug angehoben, wobei die Bolzen 44 in die Kerben 47 einfahren. Die Verriegelungsbolzen 48 sind noch ganz in der Kippplatte 46.

Beim Anheben wird die Feder 49 zusammengedrückt, wobei die Achse 50 im Schlitz 51 um die Länge 52 ansteigt. Dabei werden durch die beiden Stossstangen 53 die Verriegelungsbolzen 48 so bewegt, dass die Tragbolzen 44 in der Kippplatte 46 verankert sind. Die Verriegelung 61 des Deckels 36 wird während dieser Bewegung über/die Stange 56 freigegeben.

Der so durch das Hebezeug 41 festgehaltene Behälter 38 kann nun angehoben werden und vom Kran in die gewünschte Lage über dem Lastwagen geschwenkt werden.

Die Kippbewegung kann z.B. durch den Motor 54 über die Zahnräder 55 auf die Achse 50 ausgeführt werden.

Bei der Kippbewegung zur Entleerung des gesammelten Glases tritt der Bolzen 57 um die u-förmige getrennte Schiene 58 ein, wobei der Deckel abgehoben wird. Die Schiene 58 wird von den Streben 59 an der Vorrichtung 41 in der benötigten Lage gehalten.

Die Kippbewegung geht so weit, bis der Behälter 38 sich in der gestrichelt gezeichneten Position 38a befindet und der Deckel 36 mit der Vorrichtung 37 sich in der Position 36a bez. 37a. Der Behälter kann sich damit vollständig entleeren.

Die Sicherungsbolzen 48 sorgen dafür, dass der Behälter 38, durch die Bolzen 44 gehalten, nicht aus der Kippplatte 46 fallen kann. Um die Ausdehnung der Feder 49 in der gekippten Stellung zu vermeiden, ist der an der Kippplatte 46 befestigte Bolzen 60 nun in der Stellung 60a, wo er durch den Ring 62, welcher an der Vorrichtung 41 befestigt ist, vor dem Zurückgehen in die Ausgangslage gehindert wird. In dieser Stellung ist die Reinigung des Behälters 38 und der Vorrichtung 37 leicht möglich.

Nach dem Entleeren wird der Behälter 38 zuerst wieder in die aufrechte Lage gedreht, wobei sich der Deckel von selbst wieder schliesst. Beim Abstellen an Boden wird der Deckel wieder automatisch verriegelt und die Tragbolzen freigegeben. Der Schlitz 51 im Ring 62 ermöglicht, dass der Bolzen 60 im unbelasteten Zustand der Vorrichtung 41 die Kippbewegung verriegelt, da die Feder 49 die Achse 50 nun um die Länge 52 nach unten drückt.

Zum Verständnis der Vorrichtung sei hier noch erwähnt, dass die Achse 50 in der Dicke der Kippplatte 46 vierkantig ausgeführt ist.

Es ist weiter vorteilhaft, dass die Lage der Drehbewegung so gewählt ist, dass die horizontale Schwerachse des beladenen Behälters wenig unter der Drehachse liegt, was die Betriebssicherheit erhöht und zum Kippen am wenigsten Kraft braucht.

Bei der Verwendung anders geformter Behälter ist erfindungs- und sinngemäss darauf zu achten, dass die Zerschlagvorrichtung so angebracht ist, dass die Bruchstücke ausnahmslos in den Behälter fallen, dass beim Entleerungsvorgang des Behälters sich die Entleerungsöffnungen im gewünschten Zeitpunkt öffnen und dabei die Sicherheit der Bedienungspersonen voll gewährleistet ist.

### Patentansprüche

1. System zum Zerkleinern von Glasbehältern und Sammeln des Glasbruchs, mit einem Behälter für den Glasbruch und mit einer Zerkleinerungsvorrichtung, dadurch gekennzeichnet, dass der genannte Behälter so ausgestaltet ist, dass dessen Inhalt durch die Betätigung eines einfachen Hebezeuges in ein Transportmittel umgefüllt werden kann, und dass das Hebezeug durch eine Verriegelungsautomatik und Ablaufsteuerung die schnelle, vollständige und unfallsichere Entleerung des genannten Behälters erlaubt.

2. Zerkleinerungsvorrichtung für das System nach Anspruch 1, dadurch gekennzeichnet, dass die genannte Vorrichtung eine Einfüllöffnung aufweist, die bei der Vorrichtung durch die Bewegung einer zur Behälterwand parallele Scheibe geschlossen wird, dass bei der Betätigung der Vorrichtung Mittel zum Zerschlagen der Glasbehälter vorzugsweise durch Kurvenscheiben so bewegt werden, dass diese Mittel im weiteren Ablaufszyklus die Zerkleinerung der Glasgegenstände durch Schlag bewerkstelligen, und dass Auflageflächen, die zum Aufsetzen der zu zerschlagenden Behälter vorgesehen sind, durch die erwähnten Bewegungsmittel, vorzugsweise Kurvenscheiben, direkt oder indirekt vollständig von Glasbruchstücken befreit werden, und dass die Einfüllöffnung am Ende des Arbeitsvorganges wieder freigegeben wird.

3. Zerkleinerungsvorrichtung für das System nach Anspruch 1, dadurch gekennzeichnet, dass mechanische Elemente in geeigneter Weise dafür sorgen, dass die Glasbehälter unabhängig von der Drehgeschwindigkeit der Kurbel immer zerschlagen werden.

4. Vorrichtung nach den Ansprüchen 2 und 3, dadurch gekennzeichnet, dass die Vorrichtung so ausgelegt ist, z.B. durch Neigung der Behälterauflage und geeignete Wahl des Aufschlagpunktes der Schlagmittel, dass der Zerkleinerungsvorgang unabhängig von der Grösse der eingelegten Glasgegenstände erfolgt.

5. Vorrichtung nach den Ansprüchen 2 und 3, dadurch gekennzeichnet, dass die Geometrie der Bewegungs mittel, z.B. Kurvenscheiben, so ausgelegt ist, dass das zur Bedienung erforderliche Drehmoment möglichst klein und gleichmässig über den Arbeitszyklus verteilt ist, dass die Beschickungsöffnung während des Zerkleinerungsvorganges zum Schutz der Bedienungsperson gegen Verletzungen geschlossen ist, und dass das Ende des Arbeitsvorganges neben der Beschickungsöffnung durch Einrasten eines mechanischen Elements, z.B. eines Bolzens, in ein anderes, sich bewegendes Element, z.B. die Kurvenscheibe, das Erreichen der Ausgangslage der Vorrichtung angezeigt wird.

6. Vorrichtung nach den Ansprüchen 2 und 3, dadurch gekennzeichnet, dass sie von Hand, z.B. an einem an der Verschlussvorrichtung angebrachtem Hebel oder Griff, oder mit motorischer Kraft angetrieben wird, wobei die Sicherheit der Bedienungsperson durch eine Rutschkupplung zwischen dem Antrieb und der Vorrichtung gesichert ist und zudem die Auslösung des Vorgangs nur dann erfolgen kann, wenn Sicherheitselemente, z.B. Kontakte oder Photozellen, anzeigen, dass die Beschickungsöffnung ohne Gefahr für die Bedienungsperson geschlossen werden kann.

7. Vorrichtung nach einem der vorstehenden Ansprüche, dadurch gekennzeichnet, dass sie mit Mitteln zur Ausgabe von Münzen oder Jetons ausgerüstet ist.

8. Behälter für das System, gemäss Anspruch 1, dadurch gekennzeichnet, dass in seinem Innern eine Vorrichtung nach Anspruch 2 bis 6 angebracht ist, dass dieser eine verschliess- und verriegelbare Öffnung zur Entleerung des Inhaltes besitzt, und dass er Vorrichtungen besitzt, welche es erlauben, dass der Behälter durch Eingreifen eines Hebezeuges zur Entleerung in der gewünschten Weise bewegt werden kann.

9. Hebezeug für das System nach Anspruch 1, dadurch gekennzeichnet, dass es den Behälter beim Aufheben durch die Einwirkung der Schwerkraft in seiner Greifvorrichtung verriegelt, dass bei diesem Vorgang die Verriegelung des Behälterdeckels gelöst wird, und dass die Bewegung zur Entleerung freigegeben wird.

10. Hebezeug nach Anspruch 9, dadurch gekennzeich net, dass bei der Bewegung zur Entleerung des Behälters eine Vorrichtung angebracht ist, welche so angelegt ist, dass bei dieser Bewegung die verschliessbare Öffnung freigegeben wird und der Behälter auch in dieser Phase des Betriebsablaufes durch die genannte Verriegelung unverrückbar im Hebezeug festgehalten wird.

11. Hebezeug nach den Ansprüchen 8 und 9, dadurch gekennzeichnet, dass die beschriebenen Vorgänge voll reversibel sind und das Hebezeug den Behälter nach dessen Abstellen auf den Boden vollständig freigibt.

0262066

Fig. 1a

Fig. 1 b

0262066

Fig. 2a

Fig. 2b

0262066

Fig. 4

## EINSCHLÄGIGE DOKUMENTE

EP 87440051.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR - A1 - 2 494 598 (BROCCARDO) | 1 | B 02 C 19/14 |
| A | * Seite 1, Zeile 1 - Seite 3, Zeile 35; Fig. 1-4 * | 2,5,8 | B 66 F 9/19 |
| | -- | | B 65 F 3/12 |
| A | DE - A1 - 2 930 181 (RINFRET) | 1-5,8 | |
| | * Gesamt * | | |
| | -- | | |
| A | DE - A1 - 2 531 952 (FROST) | 1,9,11 | |
| | * Seite 7, Absatz 1 * | | |
| | -- | | |
| A | AT - B - 246 031 (KOLOSEUS) | 1,9,11 | |
| | * Seite 2, Zeile 27 * | | |
| | -- | | |
| A | US - A - 3 291 329 (ORD) | 1,9,11 | RECHERCHIERTE SACHGEBIETE (Int. Cl.4) |
| | * Fig. 1 * | | |
| | ---- | | B 02 C 18/00 |
| | | | B 02 C 19/00 |
| | | | B 65 F 1/00 |
| | | | B 65 F 3/00 |
| | | | B 66 F 9/00 |
| | | | B 66 F 11/00 |
| | | | B 66 F 19/00 |

Der vorliegende Recherchenbericht wurde für alle Patentansprüche erstellt.

| Recherchenort | Abschlußdatum der Recherche | Prüfer |
|---|---|---|
| WIEN | 18-11-1987 | BAUER |